# EUROPÄISCHE PATENTANMELDUNG

(11) **EP 2 916 370 A1**
(43) Veröffentlichungstag der Anmeldung: **09.09.2015**
(21) Anmeldenummer: 14158377.3
(22) Anmeldetag: 07.03.2014
(51) Int. Cl.: H01M 2/14, H01M 2/16

(54) **Faserverstärktes Separator-Bauteil für eine Batterie**

(71) Anmelder: Siemens Aktiengesellschaft, 80333 München (DE)
(72) Erfinder: Soller, Thomas, Dr., 94405 Landau/Isar (DE); Kühne, Michael, Dr., 90762 Fürth (DE); Menapace, Wolfgang, 91052 Erlangen (DE)

(57) **Zusammenfassung**

Es wird ein Separator-Bauteil (4) für eine Batterie, beschrieben. Das Separator-Bauteil umfasst einen Kompositwerkstoff, welcher keramisches Fasermaterial (2) und ionenleitfähiges Matrixmaterial (3) umfasst.

## Beschreibung

Die vorliegende Erfindung betrifft ein Separator-Bauteil für eine Batterie, eine Batteriezelle, insbesondere eine Hochtemperatur-Batteriezelle, und ein Verfahren zur Herstellung eines Separator-Bauteils für eine Batterie.

Der Aufbau von Hochtemperatur-Batteriezellen mit keramischem Elektrolyten, zum Beispiel NaNiCl₂-Zellen oder NaS-Zellen, beinhaltet eine positive Elektrode ("Kathode"), welche mit einem geeigneten Metall, einem Salz und einem bei Betriebstemperatur flüssigen Elektrolyten gefüllt ist, einen keramischen Separator (zum Beispiel Na-β-Al₂O₃), welcher für positive Ionen (z.B. Na⁺) durchlässig ist, und eine negative Elektrode ("Anode") mit einem bei Arbeitstemperatur flüssigen Metall wie zum Beispiel Natrium. Bei der Auslegung des Separator-Bauteils muss ein Kompromiss gefunden werden zwischen einer hinreichend großen mechanischen Stabilität, einem möglichst hohen elektronischen Widerstandswert bei gleichzeitig möglichst geringem ionischen Widerstandswert, zur Erzielung einer hohen Leistungsdichte, einer möglichst geringen Ausschussrate bei der Produktion, sowie einer möglichst langen Lebensdauer.

Zum Beispiel wird im Fall von NaNiCl₂-Zellen bei kommerziell erhältlichen Produkten der keramische Separator als kleeblattförmige, einseitig verschlossene Röhre mit einer Länge von ca. 25 cm und einer Dicke von ca. 1,2 mm ausgeführt, wobei ein Widerstandswert von ca. 10 mOhm im Betrieb erreicht wird. Die Ausschussrate während der Produktion ist ein wesentlicher Kostenfaktor, und die erwartete Lebensdauer des gesamten Zellaufbaus liegt bei ca. 3000 Lade-/Entlade-Zyklen.

Während des Betriebs ist der Separator unter anderem sowohl mechanisch-, thermisch-, als auch elektrochemischvermittelten Belastungen ausgesetzt. Mechanisch-vermittelte Belastungen entstehen zum Beispiel durch Druck-/Zugspannungen, die bei Stößen gegen das Batteriegehäuse oder beim Abkühlen der Batterie aufgrund des Flüssig-Fest-Phasenwechsels der Elektrodenmaterialien entstehen. Thermisch-vermittelte Belastungen entstehen zum Beispiel aufgrund von Temperaturgradienten, welche durch die schlechte Wärmeleitfähigkeit der verwendeten Materialien bei der Temperierung der Zellen oder durch die unterschiedliche Wärmetönung der Redox-Prozesse beim Laden/Entladen entstehen. Elektrochemisch-vermittelte Belastungen entstehen zum Beispiel durch die an Separatordefekten initiierte Ausscheidung von Natrium im Inneren des Separators.

Da ein Bruch des Separators im Regelfall zu einem unmittelbaren Ausfall der Zelle führt, sollte das Separatormaterial eine möglichst hohe Bruchzähigkeit K_{Ic} und Bruchfestigkeit σ_{b} aufweisen. Unvorteilhafterweise zeigen keramische Werkstoffe im Allgemeinen ein sprödes Verhalten mit geringen K_{Ic}- und σ_{b}-Werten. Für polykristallines Na-β-Al₂O₃ gilt beispielsweise: K_{Ic} ∼ 3 MPa m^{1/2} und σ_{b} ∼ 280 MPa. Dabei liegt die kritische Rissgröße zwischen 50 und 100 µm. Zum Vergleich gilt für austenitischen Edelstahl: K_{Ic} ∼ 50 MPa m^{1/2} und σ_{b} ∼ 590 MPa. Dabei liegt die kritische Rissgröße zwischen 3 und 5 mm. Für alpha-Al₂O₃ gilt: K_{Ic} ∼ 4-5 MPa m^{1/2} und σ_{b} ∼ 320 MPa.

Die Erhöhung der mechanischen Stabilität, insbesondere der Bruchzähigkeit und -festigkeit, des keramischen Separators ist daher eine grundsätzliche Herausforderung für entsprechende Batteriezellen, da Keramikbruch der lebensdauerbestimmende Hauptausfall-Mechanismus solcher Batteriesysteme sein kann.

Zur Verbesserung der bruchmechanischen Eigenschaften werden bisher mehrere Lösungsansätze verfolgt. So kann das Separatormaterial mit härtend wirkenden Dotierstoffen (insbesondere Y-stabilisiertes ZrO₂) modifiziert werden, wobei Werte von K_{Ic} ∼ 5-8 MPa m^{1/2} und σ_{b} ∼ 300 - 350 MPa erreichbar sind, zum Beispiel bei Dotierstoffgehalten von bis 15%. Diese Vorgehensweise geht allerdings zu Lasten des ionischen Widerstandes, der um bis zu 100% ansteigen kann. Statt einer Dotierung kann auch eine Infiltration des vorgesinterten Bauteils mit einem Härtstoff erfolgen. Die erzielbare Festigkeitssteigerung als auch der Verlust an ionischer Leitfähigkeit ist bei dieser Variante geringer als bei vorgenanntem Verfahren.

Ferner kann auch die Prozessierung oder thermische Behandlung des Separatormaterials optimiert werden, um ein möglichst defektfreies, homogenes und feinkorngehärtetes Gefüge zu erhalten. Die so erzielbaren Effekte liegen im Realfall typischerweise unterhalb der über Dotierung erreichbaren Verbesserung des Bruchverhaltens. Schließlich kann der Separator auch einfach mit entsprechenden Sicherheitsmargen beaufschlagt und in Folge dicker ausgeführt sowie mittels schwingungsdämpfender Strukturen im Batterieaufbau geschützt werden.

Vor diesem Hintergrund ist es Aufgabe der vorliegenden Erfindung ein vorteilhaftes Separator-Bauteil, eine vorteilhafte Batterie und ein vorteilhaftes Verfahren zur Herstellung eines Separator-Bauteils für eine Batterie zur Verfügung zu stellen.

Diese Aufgabe wird durch ein Separator-Bauteil gemäß Patentanspruch 1, eine Batterie gemäß Patentanspruch 9 und ein Verfahren zur Herstellung eines Separator-Bauteils für eine Batterie gemäß Patentanspruch 10 gelöst. Die abhängigen Ansprüche enthalten weitere, vorteilhafte Ausgestaltungen der Erfindung.

Das erfindungsgemäße Separator-Bauteil für eine Batterie, beispielsweise für eine Batteriezelle oder eine Hochtemperatur-Batterie, umfasst einen Kompositwerkstoff oder Verbundwerkstoff, welcher keramisches Fasermaterial und ionenleitfähiges Matrixmaterial umfasst. Bei dem keramischen Fasermaterial handelt es sich vorzugsweise um keramisches Endlos-Fasermaterial. Die Verwendung des beschriebenen Kompositwerkstoffes im Rahmen des Separator-Bauteils hat den Vorteil, dass die Bruchanfälligkeit des Separators signifikant reduziert wird.

Die Erfindung verringert die Bruchanfälligkeit des keramischen Separators von Batterien, beispielsweise Hochtemperatur-Batteriezellen, indem zum Beispiel in den keramischen Separator keramisches Endlos-Fasermaterial mit hoher spezifischer Festigkeit, bevorzugt von 200 Nm/g bis 1000 Nm/g, besonders bevorzugt von 400 - 1000 Nm/g, eingebracht wird.

Der so erhaltene Kompositwerkstoff aus keramischer Faser und ionenleitfähiger Matrix weist eine deutlich verbesserte Bruchzähigkeit und Bruchfestigkeit auf und ist somit schadenstoleranter.

Ursächlich für die Erhöhung des Rissausbreitungswiderstandes ist die Ermöglichung zusätzlicher energiedissipativer Mechanismen durch das Fasermaterial. Unter energiedissipativen Mechanismen werden in verallgemeinerter Form folgenden Mechanismen verstanden: Rissverzweigung, Rissablenkung, Rissverzögerung, Rissüberbrückung, Phasentransformation und Faserauszug.

Vorteilhafterweise weist das verwendete Fasermaterial eine Bruchfestigkeit von mindestens 1500 MPa auf, insbesondere zwischen 1500 MPa und 3000 MPa. Vorzugsweise weist das verwendete Fasermaterial eine Bruchfestigkeit von mindestens 1700 MPa auf, insbesondere zwischen 1700 MPa und 3000 MPa.

Vorzugsweise weist das verwendete Fasermaterial eine spezifische Festigkeit von 200 Nm/g bis 1000 Nm/g, besonders bevorzugt von 400 - 1000 Nm/g, auf.

Der verwendete Kompositwerkstoff kann eine Bruchfestigkeit von mindestens 1000 MPa aufweisen, zum Beispiel zwischen 1000 MPa und 1500 MPa, bevorzugt zwischen 1300 MPa und 1400 MPa. Weiterhin kann der verwendete Kompositwerkstoff eine Bruchzähigkeit bis zu 20 MPa m^{1/2} aufweisen, insbesondere zwischen 9 MPa m^{1/2} und 20 MPa m^{1/2}, vorteilhafterweise wischen 15 MPa m^{1/2} und 20 MPa m^{1/2}.

Darüber hinaus kann das Separator-Bauteil Na-β-Al₂O₃-basiertes Matrixmaterial umfassen. Bevorzugt umfasst das Separator-Bauteil oxidisches Fasermaterial, zum Beispiel α-Al₂O₃-basiertes Fasermaterial, wie beispielsweise des Typs Nextel der Firma 3M, hierbei insbesondere die Variante Nextel 610.

Das Separator-Bauteil kann zwischen 30 vol% und 60 vol%, insbesondere zwischen 40 vol% und 50 vol%, zum Beispiel 45 vol%, Fasermaterial umfassen.

Speziell für den Fall von Na-β-Al₂O₃-basierten Separatoren bieten sich insbesondere oxidische Verstärkungsfasern, bevorzugt auf Basis von alpha-Al₂O₃ an, beispielsweise des Typs Nextel der Firma 3M, hierbei insbesondere die Variante Nextel 610. Die Bruchfestigkeit der reinen Fasern kann dabei im Bereich σ_{b} = 1700 MPa bis σ_{b} = 2900 MPa liegen. In Kompositen von alpha-Al₂O₃ mit 45vol% Fasermaterial werden Werte von σ_{b} = 1300 MPa bis σ_{b} = 1400 MPa erreicht. Im Hinblick auf die Bruchzähigkeit sind Werte von bis zu 20 MPa m^{1/2} realisierbar.

Die Einbringung des Fasermaterials erfolgt bevorzugt über die Herstellung einer Faser-Preform, welche anschließend mit dem ionenleitfähigen Matrixmaterial infiltriert und gegebenenfalls thermisch nachbehandelt wird, insbesondere entbindert und/oder gesintert und/oder getempert wird. Im Fall von kleeblattförmigen, einseitig geschlossenen Separatorröhren wäre als Preform zum Beispiel ein entsprechend gestalteter "Strumpf" aus Keramikfaser-Gewebe, insbesondere gewebtes oder gestricktes oder gehäkeltes Keramikfaser-Gewebe, geeignet. Mögliche Infiltrationsverfahren sind beispielsweise Schmelzinfiltration, Chemische Gasphasen-Infiltration, Sol-Gel-Infiltration, Polymer-Infiltration, gegebenenfalls mit anschließender Pyrolyse, Schlicker-Infiltration, Reaktionsbinden (Reaction Bonding) oder ein Harzinjektionsverfahren (RTM - Resin Transfer Molding).

Das Fasermaterial kann eine Beschichtung mit einem in Bezug auf eine chemische Reaktion mit dem Matrixmaterial inerten Beschichtungsmaterial umfassen oder aufweisen. Dabei kann das Fasermaterial zumindest teilweise beschichtet sein. Durch die Beschichtung werden ungewünschte Reaktionen des Fasermaterials mit dem Matrixmaterial vermieden. Vorteilhafterweise kann das Fasermaterial eine Beschichtung mit einem Beschichtungsmaterial basierend auf ZrO₂ und/oder HfO₂ und/oder Y₂O₃ und/oder WO₃ und/oder Nb₂O₅ und/oder Ta₂O₅ und/oder BN umfassen.

Mögliche Verfahren zur Aufbringung der Beschichtung auf das Fasermaterial sind beispielsweise: Sol-Gel-Abscheidung, Aerosol-Abscheidung, Chemische Gasphasenabscheidung, Physikalische Gasphasenabscheidung, Elektrophoretische Abscheidung, oder Dipcoating bzw. liquid floating. Weiterhin ist es erfindungsgemäß möglich, unbeschichtetes Fasermaterial zu verwenden, welches im Zuge der Infiltration und/oder der thermischen Nachbehandlung mit dem Matrixmaterial zu einer ionenleitfähigen Verbindung reagiert, zum Beispiel über topochemische Konversion.

Das Separator-Bauteil kann grundsätzlich ein Fasermaterial-Gewebe, zum Beispiel gewebtes, gestricktes oder gehäkeltes Fasermaterial umfassen. Das Separator-Bauteil kann insbesondere in Gestalt einer Preform ausgestaltet sein. Das Separator-Bauteil kann prinzipiell als kleeblattförmige, einseitig geschlossene Separatorröhre ausgestaltet sein.

Die erfindungsgemäße Batterie umfasst ein zuvor beschriebenes, erfindungsgemäßes Separator-Bauteil. Bei der Batterie handelt es sich zum Beispiel um eine Hochtemperatur-Batterie, die insbesondere mindestens eine Batteriezelle umfasst, wie insbesondere eine NaNiCl₂ Zelle oder eine NaS-Zelle. Die erfindungsgemäße Batterie hat dieselben Vorteile wie das zuvor beschriebene erfindungsgemäße Separator-Bauteil.

Im Rahmen des erfindungsgemäßen Verfahrens zur Herstellung eines Separator-Bauteils für eine Batterie wird das Separator-Bauteil aus einem Kompositwerkstoff unter Verwendung von keramischem Fasermaterial, zum Beispiel Endlos-Fasermaterial, und ionenleitfähigem Matrixmaterial gefertigt. Das erfindungsgemäße Verfahren eignet sich insbesondere zur Herstellung eines bereits beschriebenen erfindungsgemäßen Separator-Bauteils.

Die im Zusammenhang mit dem erfindungsgemäßen Separator-Bauteil bereits beschriebenen Merkmale, insbesondere mögliche Materialen und Materialeigenschaften, können analog im Rahmen des erfindungsgemäßen Verfahrens angewendet werden. So kann zum Beispiel Fasermaterial mit einer Bruchfestigkeit von mindestens 1500 MPa, insbesondere zwischen 1500 MPa und 3000 MPa, verwendet werden und/oder das verwendete Fasermaterial eine Bruchfestigkeit von mindestens 1700 MPa, insbesondere zwischen 1700 MPa und 3000 MPa, aufweisen. Der verwendete Kompositwerkstoff kann eine Bruchfestigkeit von mindestens 1000 MPa aufweisen, zum Beispiel zwischen 1000 MPa und 1500 MPa, bevorzugt zwischen 1300 MPa und 1500 MPa. Weiterhin kann der verwendete Kompositwerkstoff eine Bruchzähigkeit bis zu 20 MPa m^{1/2} aufweisen, insbesondere zwischen 9 MPa m^{1/2} und 20 MPa m^{1/2}, vorteilhafterweise wischen 15 MPa m^{1/2} und 20 MPa m^{1/2}. Darüber hinaus kann Na-β-Al₂O₃-basiertes Matrixmaterial verwendet werden. Es kann oxidisches Fasermaterial verwendet werden, zum Beispiel α-Al₂O₃-basiertes Fasermaterial, wie beispielsweise des Typs Nextel der Firma 3M, hierbei insbesondere die Variante Nextel 610.

Bei der Batterie kann es sich zum Beispiel um eine Hochtemperatur-Batterie handeln, die insbesondere mindestens eine Batteriezelle umfasst, wie insbesondere eine NaNiCl₂ Zelle oder eine NaS-Zelle.

Im Rahmen des erfindungsgemäßen Verfahrens wird bevorzugt eine das Fasermaterial umfassende Preform hergestellt und die Preform anschließend mit dem ionenleitfähigen Matrixmaterial infiltriert. Die Preform kann aus Keramikfasern gewebt werden.

Die Infiltration kann durch Schmelzinfiltration und/oder Chemische Gasphasen-Infiltration und/oder Sol-Gel-Infiltration und/oder Polymer-Infiltration, bevorzugt mit anschließender Pyrolyse, und/oder Schlicker-Infiltration und/oder Reaktionsbinden (Reaction Bonding) und/oder Harzinjektionsverfahren (Resin Transfer Molding - RTM) erfolgen.

Grundsätzlich kann die mit dem ionenleitfähigen Matrixmaterial infiltrierte Preform thermisch nachbehandelt werden, zum Beispiel entbindert und/oder gesintert und/oder getempert werden.

Weiterhin kann das verwendete Fasermaterial mit einem in Bezug auf eine chemische Reaktion mit dem Matrixmaterial inerten Beschichtungsmaterial zumindest teilweise beschichtet werden, vorteilhafterweise vollständig beschichtet werden. Bevorzugt kann das Fasermaterial mit einem Beschichtungsmaterial basierend auf ZrO₂ und/oder HfO₂ und/oder Y₂O₃ und/oder WO₃ und/oder Nb₂O₅ und/oder Ta₂O₅ und/oder BN beschichtet werden. Das verwendete Fasermaterial kann durch Sol-Gel-Abscheidung und/oder Aerosol-Abscheidung und/oder Chemische Gasphasenabscheidung und/oder Physikalische Gasphasenabscheidung und/oder Elektrophoretische Abscheidung und/oder Dipcoating/Liquid Floating beschichtet werden.

Alternativ dazu kann unbeschichtetes Fasermaterial verwendet werden, welches im Rahmen der Infiltration und/oder der thermischen Nachbehandlung mit dem Matrixmaterial zu einer ionenleitfähigen Verbindung reagiert, zum Beispiel über topochemische Konversion.

Die Erfindung hat insgesamt den Vorteil, dass durch die Einbringung einer Verstärkungsphase in den keramischen Separator einer Batterie die Bruchanfälligkeit des Separators signifikant reduziert wird. Die Vorteile liegen insbesondere in einer Erhöhung der Bruchzähigkeit und -festigkeit um bis zu einem Faktor 5, einer Verringerung lokaler thermischer Gradienten im Betrieb durch erhöhte Wärmeleitfähigkeit, einer Erhöhung der Schadenstoleranz, einer Verlängerung der Lebensdauer des Batteriesystems, der Möglichkeit einer Anwendbarkeit für verschiedene Faserwerkstoffe und Thermalbatterien, zum Beispiel NaNiCl₂, NaS, und andere. Ein weiterer Vorteil liegt in der großserienfähigen, reproduzierbaren, flexiblen und kostengünstigen Herstellbarkeit.

### Beschreibung von Ausführungsbeispielen

Weitere Merkmale, Eigenschaften und Vorteile der vorliegenden Erfindung werden im Folgenden anhand von Ausführungsbeispielen unter Bezugnahme auf die beigefügten Figuren näher beschrieben. Alle bisher und im Folgenden beschriebenen Merkmale sind dabei sowohl einzeln als auch in einer beliebigen Kombination miteinander vorteilhaft. Die im Folgenden beschriebenen Ausführungsvarianten stellen lediglich Beispiele dar, welche den Gegenstand der Erfindung jedoch nicht beschränken.
Fig. 1 zeigt schematisch eine gewebte Faser-Preform.
Fig. 2 zeigt schematisch ein erfindungsgemäßes faserverstärktes Separator-Bauteil in einer perspektivischen Ansicht.

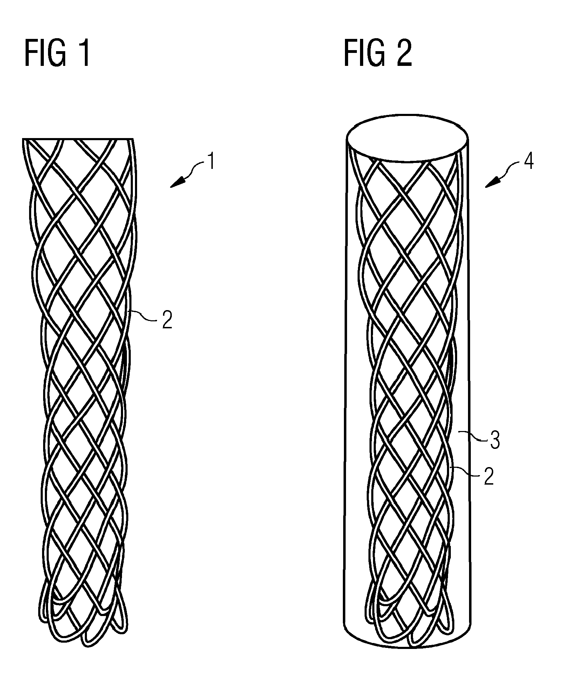

Die Figur 1 zeigt schematisch eine gewebte Faser-Preform 1 aus Keramikfasern 2. Die Preform 1 ist zum Beispiel ausgelegt zur Herstellung von kleeblattförmigen, einseitig geschlossenen Separatorröhren 4. Die Preform 1 wird anschließend mit dem ionenleitfähigen Matrixmaterial 3 infiltriert und gegebenenfalls thermisch nachbehandelt, insbesondere entbindert und/oder gesintert und/oder getempert. Dies ist in der Figur 2 dargestellt, welche schematisch ein erfindungsgemäßes faserverstärktes Separator-Bauteil 4 in einer perspektivischen Ansicht zeigt.

Die Infiltration kann durch Schmelzinfiltration und/oder Chemische Gasphasen-Infiltration und/oder Sol-Gel-Infiltration und/oder Polymer-Infiltration, bevorzugt mit anschließender Pyrolyse, und/oder Schlicker-Infiltration und/oder Reaktionsbinden (Reaction Bonding) und/oder Harzinjektionsverfahren (Resin Transfer Molding - RTM) erfolgen.

Weiterhin kann das verwendete Fasermaterial mit einem in Bezug auf eine chemische Reaktion mit dem Matrixmaterial inerten Beschichtungsmaterial zumindest teilweise beschichtet werden, vorteilhafterweise vollständig beschichtet werden. Bevorzugt kann das Fasermaterial mit einem Beschichtungsmaterial basierend auf ZrO₂ und/oder HfO₂ und/oder Y₂O₃ und/oder WO₃ und/oder Nb₂O₅ und/oder Ta₂O₅ und/oder BN beschichtet werden. Das verwendete Fasermaterial kann durch Sol-Gel-Abscheidung und/oder Aerosol-Abscheidung und/oder Chemische Gasphasenabscheidung und/oder Physikalische Gasphasenabscheidung und/oder Elektrophoretische Abscheidung und/oder Dipcoating/Liquid Floating beschichtet werden.

Weiterhin ist es erfindungsgemäß möglich, unbeschichtetes Fasermaterial zu verwenden, welches im Zuge der Infiltration und/oder der thermischen Nachbehandlung mit dem Matrixmaterial zu einer ionenleitfähigen Verbindung reagiert, zum Beispiel via topochemischer Konversion.

Speziell für den Fall von Na-β-Al₂O₃-basierten Separatoren bieten sich insbesondere oxidische Verstärkungsfasern, bevorzugt auf Basis von alpha-Al₂O₃ an, beispielsweise des Typs Nextel der Firma 3M, hierbei insbesondere die Variante Nextel 610. Die Bruchfestigkeit der reinen Fasern kann dabei im Bereich zwischen 1700 MPa und 3000 MPa liegen. In Kompositen von alpha-Al₂O₃ mit 45vol% Fasermaterial werden Bruchfestigkeitswerte von zwischen 1300 MPa und 1500 MPa erreicht. Im Hinblick auf die Bruchzähigkeit sind Werte von bis zu 20 MPa m^{1/2} realisierbar.

## Patentansprüche

1. Separator-Bauteil (4) für eine Batterie,
**dadurch gekennzeichnet, dass**
das Separator-Bauteil einen Kompositwerkstoff umfasst, welcher keramisches Fasermaterial (2) und ionenleitfähiges Matrixmaterial (3) umfasst.

2. Separator-Bauteil (4) nach dem vorherigen Anspruch,
**dadurch gekennzeichnet, dass**
das Fasermaterial (2) eine Bruchfestigkeit von mindestens 1500 MPa aufweist und/oder eine spezifische Festigkeit von 200 Nm/g bis 1000 Nm/g aufweist.

3. Separator-Bauteil (4) nach einem der vorherigen Ansprüche,
**dadurch gekennzeichnet, dass**
der Kompositwerkstoff eine Bruchfestigkeit von mindestens 1000 MPa aufweist und/oder der Kompositwerkstoff eine Bruchzähigkeit zwischen 9 MPa m^{1/2} und 20 MPa m^{1/2} aufweist.

4. Separator-Bauteil (4) nach einem der vorherigen Ansprüche,
**dadurch gekennzeichnet, dass**
das Separator-Bauteil Na-β-Al₂O₃-basiertes Matrixmaterial (3) umfasst und/oder das Separator-Bauteil (4) oxidisches Fasermaterial (2) umfasst.

5. Separator-Bauteil (4) nach einem der vorherigen Ansprüche,
**dadurch gekennzeichnet, dass**
das Separator-Bauteil (4) zwischen 30 vol% und 60 vol% Fasermaterial umfasst.

6. Separator-Bauteil (4) nach einem der vorherigen Ansprüche,
**dadurch gekennzeichnet, dass**
das Fasermaterial (2) eine Beschichtung mit einem in Bezug auf eine chemische Reaktion mit dem Matrixmaterial (3) inerten Beschichtungsmaterial umfasst.

7. Separator-Bauteil (4) nach einem der vorherigen Ansprüche,
**dadurch gekennzeichnet, dass**
das Fasermaterial (2) eine Beschichtung mit einem Beschichtungsmaterial basierend auf ZrO₂ und/oder HfO₂ und/oder Y₂O₃ und/oder WO₃ und/oder Nb₂O₅ und/oder Ta₂O₅ und/oder BN umfasst.

8. Separator-Bauteil (4) nach einem der vorherigen Ansprüche,
**dadurch gekennzeichnet, dass**
das Separator-Bauteil (4) Fasermaterial-Gewebe (1) umfasst.

9. Batterie, welche ein Separator-Bauteil (4) nach einem der vorherigen Ansprüche umfasst.

10. Verfahren zur Herstellung eines Separator-Bauteils (4) für eine Batterie,
**dadurch gekennzeichnet, dass**
das Separator-Bauteil (4) aus einem Kompositwerkstoff unter Verwendung von keramischem Fasermaterial (2) und ionenleitfähigem Matrixmaterial (3) gefertigt wird.

11. Verfahren nach dem vorherigen Anspruch,
**dadurch gekennzeichnet, dass**
eine das Fasermaterial (2) umfassende Preform (1) hergestellt wird und die Preform (1) anschließend mit dem ionenleitfähigen Matrixmaterial (3) infiltriert wird.

12. Verfahren nach dem vorherigen Anspruch,
**dadurch gekennzeichnet, dass**
die Infiltration durch Schmelzinfiltration und/oder Chemische Gasphasen-Infiltration und/oder Sol-Gel-Infiltration und/oder Polymer-Infiltration und/oder Schlicker-Infiltration und/oder Reaktionsbinden (Reaction Bonding) und/oder ein Harzinjektionsverfahren (Resin Transfer Molding - RTM) erfolgt.

13. Verfahren nach einem der vorherigen Ansprüche,
**dadurch gekennzeichnet, dass**
die mit dem ionenleitfähigen Matrixmaterial (3) infiltrierte Preform (1) thermisch nachbehandelt wird.

14. Verfahren nach einem der vorherigen Ansprüche,
**dadurch gekennzeichnet, dass**
das verwendete Fasermaterial mit einem in Bezug auf eine chemische Reaktion mit dem Matrixmaterial inerten Beschichtungsmaterial zumindest teilweise beschichtet wird oder unbeschichtetes Fasermaterial verwendet wird, welches im Rahmen der Infiltration und/oder der thermischen Nachbehandlung mit dem Matrixmaterial zu einer ionenleitfähigen Verbindung reagiert.

15. Verfahren nach dem vorherigen Anspruch,
**dadurch gekennzeichnet, dass**
das Fasermaterial (2) mit einem Beschichtungsmaterial basierend auf ZrO₂ und/oder HfO₂ und/oder Y₂O₃ und/oder WO₃ und/oder Nb₂O₅ und/oder Ta₂O₅ und/oder BN beschichtet wird, und/oder
das verwendete Fasermaterial (2) durch Sol-Gel-Abscheidung und/oder Aerosol-Abscheidung und/oder Chemische Gasphasenabscheidung und/oder Physikalische Gasphasenabscheidung und/oder Elektrophoretische Abscheidung und/oder Dipcoating/Liquid Floating beschichtet wird.
